# EUROPÄISCHE PATENTANMELDUNG

(11) **EP 2 860 852 A1**
(43) Veröffentlichungstag der Anmeldung: **15.04.2015**
(21) Anmeldenummer: 13188456.1
(22) Anmeldetag: 14.10.2013
(51) Int. Cl.: H02K 9/06, H02K 9/08, H02K 9/10

(54) **Einrichtung zum Ablenken von zumindest einem Teil eines axial in einem zwischen einem Rotor und einem Stator einer rotierenden elektrischen Maschine angeordneten Zwischenraum strömenden Kühlfluids**

(71) Anmelder: Siemens Aktiengesellschaft, 80333 München (DE)
(72) Erfinder: Grau Sorarrain, Esteban, 40215 Düsseldorf (DE); Jäkel, Christian, 45468 Mülheim an der Ruhr (DE); Koebe, Mario, 45478 Mülheim an der Ruhr (DE); Kowalski, Matthias, 45470 Mülheim an der Ruhr (DE); Lehmann, Christoph, 47506 Neukirchen-Vluyn (DE); Mashkin, Andrey, 50672 Köln (DE); Plotnikova, Olga, 42369 Wuppertal (DE); Schild, Carolin, 45478 Mülheim an der Ruhr (DE)

(57) **Zusammenfassung**

Die Erfindung betrifft eine Einrichtung zum Ablenken von zumindest einem Teil eines axial in einem zwischen einem Rotor und einem Stator einer rotierenden elektrischen Maschine, insbesondere eines Turbogenerators, angeordneten Zwischenraum strömenden Kühlfluids, gekennzeichnet durch wenigstens eine an einem vorgebbaren Abschnitt einer Außenseite des Rotors und in dem Zwischenraum anordbare Schaufel, welche derart ausgebildet und anordbar ist, dass mit ihr ein Teil des in dem Zwischenraum strömenden Kühlfluids radial in Richtung des Stators ablenkbar ist.

## Beschreibung

Die Erfindung betrifft eine Einrichtung zum Ablenken von zumindest einem Teil eines axial in einem zwischen einem Rotor und einem Stator einer rotierenden elektrischen Maschine, insbesondere eines Turbogenerators, angeordneten Zwischenraum strömenden Kühlfluids.

Des Weiteren betrifft die Erfindung eine einen Rotor aufweisende Rotoreinheit für eine rotierende elektrische Maschine, insbesondere für einen Turbogenerator, sowie eine rotierende elektrische Maschine, insbesondere einen Turbogenerator, mit einem Stator und einem Rotor.

Ferner betrifft die Erfindung ein Verfahren zum Kühlen einer einen Rotor und einen Stator aufweisenden rotierenden elektrischen Maschine, insbesondere eines Turbogenerators, wobei ein Kühlfluid in einen sich axial zwischen dem Rotor und dem Stator erstreckenden Zwischenraum eingeleitet wird.

Rotierende elektrische Maschinen in Form von Turbogeneratoren werden in Kraftwerken zum Erzeugen von elektrischer Energie eingesetzt. Hierzu ist ein Turbogenerator mechanisch mit wenigstens einer Gasturbine und/oder einer Dampfturbine gekoppelt, wobei der Turbogenerator zusammen mit der Gasturbine einen Turbosatz bildet.

Während des Betriebs einer rotierenden elektrischen Maschine wird zwangsläufig Wärme in dem Stator und/oder dem Rotor der rotierenden elektrischen Maschine erzeugt. Diese Verlustwärme entsteht durch Umwandlung von mechanischer Energie in elektrische Energie mittels der rotierenden elektrischen Maschine. Die in einem Stator und/oder einem Rotor einer rotierenden elektrischen Maschine erzeugte Wärme muss zu einem sicheren Betrieb der rotierenden elektrischen Maschine aus der rotierenden elektrischen Maschine abgeführt werden. Dies ist insbesondere deshalb erforderlich, da an dem Stator und/oder dem Rotor elektrische Isolierungen vorhanden sind, welche ab Erreichen einer bestimmten Temperatur beeinträchtigt werden würden, was zu schädigenden elektrischen Kurzschlüssen führen könnte. Je mehr Wärme aus einer rotierenden elektrischen Maschine abgeführt wird, desto höher kann die rotierende elektrische Maschine ausgelastet werden, was mit einer entsprechenden Leistungssteigerung einhergeht.

Herkömmlich wird zur Wärmeabführung aus einer rotierenden elektrischen Maschine bzw. zur Kühlung des Stators und/oder des Rotors der rotierenden elektrischen Maschine ein Kühlfluid in Form von Umgebungsluft, Wasser, Wasserstoff und/oder einem Wasserstoff enthaltenden Gemisch verwendet. Das Kühlfluid wird an beiden axialen Enden der rotierenden elektrischen Maschine axial zwischen den Stator und den Rotor eingeleitet und meist in der Mitte der rotierenden elektrischen Maschine radial aus der rotierenden elektrischen Maschine abgeführt.

Die Wärmeerzeugung in einem Stator und/oder einem Rotor einer rotierenden elektrischen Maschine erfolgt üblicherweise nicht gleichmäßig. Das soll heißen, dass es Bereiche der rotierenden elektrischen Maschine gibt, in denen mehr Wärme als in anderen Bereichen der rotierenden elektrischen Maschine erzeugt wird. Die Bereiche, in denen mehr Wärme erzeugt wird und/oder welche nicht ausreichend gekühlt werden, werden auch als "Hot-Spots" bezeichnet. In solchen Hot-Spots kann es durch die betriebsbedingte Wärmeerzeugung schneller zu unzulässigen und schädigenden Überhitzungen kommen als in weniger mit Wärme beaufschlagten Bereichen einer rotierenden elektrischen Maschine. Hierdurch kann eine herkömmliche rotierende elektrische Maschine nur soweit ausgelastet werden, wie es die in den Hot-Spots angeordneten Materialien für einen sicheren Betrieb der rotierenden elektrischen Maschine erlauben.

Nachteilig ist bei der herkömmlichen Verwendung eines Kühlfluids beispielsweise in Form von Umgebungsluft zur Wärmeabführung zudem, dass die Umgebungsluft beim Erreichen eines Hot-Spots bereits so viel aus anderen Bereichen einer rotierenden elektrischen Maschine stammende Wärme aufgenommen hat, dass keine ausreichende Kühlung eines Hot-Spots mehr möglich ist. Folglich kann mittels einer herkömmlichen Wärmeabführung, insbesondere unter Verwendung von Umgebungsluft, ein sicherer Betrieb einer rotierenden elektrischen Maschine lediglich bis zu einer durch die in den Hot-Spots vorliegende Wärmebelastung bedingten Auslastungsobergrenze dauerhaft sicher betrieben werden.

Aufgabe der Erfindung ist es, die Auslastbarkeit einer rotierenden elektrischen Maschine, insbesondere eines Turbogenerators, zu erhöhen und einen sicheren Betrieb der rotierenden elektrischen Maschine zu ermöglichen.

Die erfindungsgemäße Einrichtung zum Ablenken von zumindest einem Teil eines axial in einem zwischen einem Rotor und einem Stator einer rotierenden elektrischen Maschine, insbesondere eines Turbogenerators, angeordneten Zwischenraum strömenden Kühlfluids weist wenigstens eine an einem vorgebbaren Abschnitt einer Außenseite des Rotors und in dem Zwischenraum anordbare Schaufel auf, welche derart ausgebildet und anordbar ist, dass mit ihr ein Teil des in dem Zwischenraum strömenden Kühlfluids radial in Richtung des Stators ablenkbar ist.

Durch die Schaufel wird ein Teil des axial in dem Zwischenraum zwischen dem Rotor und dem Stator angeordneten Kühlfluids radial nach außen in Richtung des Stators beschleunigt. Hierdurch kann mehr Wärme von einem mit dem abgelenkten Teil des Kühlfluids beaufschlagten Abschnitt des Stators abgeführt und folglich dieser Abschnitt besser durch Konvektion gekühlt werden. Vorzugsweise wird mittels der Schaufel ein an dem Stator angeordneter Hot-Spot gekühlt.

Die verbesserte Kühlung des Stators und somit der rotierenden elektrischen Maschine ermöglicht eine Erhöhung der Auslastbarkeit einer rotierenden elektrischen Maschine und einen sicheren Betrieb der rotierenden elektrischen Maschine. Die erfindungsgemäße Einrichtung kann bei einer neuhergestellten rotierenden elektrischen Maschine vorhanden sein. Auch kann eine bereits vorhandene rotierende elektrische Maschine mit einer erfindungsgemäßen Einrichtung nachgerüstet werden.

Falls erforderlich kann die erfindungsgemäße Einrichtung auch zwei oder mehrere Schaufeln aufweisen, welche über die axiale Erstreckung des Rotors und/oder über den Umfang des Rotors in Form von Schaufelreihen angeordnet werden können.

Bevorzugt ist die Schaufel als Radialschaufel ausgebildet, auf die ein Teil des in dem Zwischenraum strömenden Kühlfluids auftrifft. Radialschaufeln sind bekannt und können in geeigneter Form und Anzahl relativ zueinander an dem Rotor angeordnet werden.

Die Einrichtung weist bevorzugt wenigstens ein Verbindungselement auf, über das die Schaufel mit dem Rotor verbindbar ist, wobei an dem Verbindungselement zumindest eine sich parallel zur Längsachse des Rotors erstreckende Durchlassöffnung derart angeordnet ist, dass durch sie ein Teil des auf das Verbindungselement auftreffenden Kühlfluids axial hindurchströmen kann. Die Einrichtung kann bei Bedarf auch zwei oder mehrere Verbindungselemente aufweisen, deren Anzahl vorzugsweise der Anzahl der Schaufeln der Einrichtung entspricht. Ein Verbindungselement kann auch zwei oder mehrere parallel zur Längsachse des Rotors angeordnete Durchlassöffnungen aufweisen. Eine Durchlassöffnung weist vorzugsweise einen für ihre Durchströmung mit einem Teil des Kühlfluids optimierten Querschnitt auf.

Bevorzugt sind die Schaufel und das Verbindungselement zur Ausbildung eines einzelnen Bauteils miteinander verbunden. Dies macht eine einfache Handhabung der Schaufel und des Verbindungselementes sowie eine einfache Anordnung der Schaufel und des Verbindungselementes an einem Rotor möglich. Die Schaufel kann zur Ausbildung der einzelnen Baueinheit insbesondere stoffschlüssig mit dem Verbindungselement verbunden sein.

Die Einrichtung umfasst bevorzugt zwei oder mehrere an dem vorgebbaren Abschnitt des Rotors über den Umfang des Rotors verteilt anordbare Schaufeln. Über die Anzahl der an einem vorgebbaren Abschnitt des Rotors anordbaren Schaufeln sowie deren Formgebung kann die Größe des von den Schaufeln radial in Richtung des Stators abgelenkten Teils des Kühlfluids variiert werden, um ein optimales Kühlungsergebnis herbeizuführen.

Bevorzugt ist die Schaufel eine Schaufel eines Trommelläufer-Radialgebläses, welches mit dem Rotor verbunden ist. Trommelläufer-Radialgebläse sind bekannt und erzeugen bei einer Drehung um ihre Längsachse eine radiale Fluidströmung, mit der wenigstens ein Hot-Spot am Stator gekühlt werden kann. Vorzugsweise ist jede Schaufel des Trommelläufer-Radialgebläses eine Schaufel im Sinne der Erfindung.

An dem Trommelläufer-Radialgebläse ist bevorzugt zumindest eine sich parallel zur Längsachse des Rotors erstreckende Durchlassöffnung derart angeordnet, dass durch sie ein Teil des auf das Trommelläufer-Radialgebläse auftreffenden Kühlfluids axial hindurchströmen kann. An dem Trommelläufer-Radialgebläse können auch zwei oder mehrere parallel zur Längsachse des Rotors angeordnete Durchlassöffnungen angeordnet sein. Eine Durchlassöffnung weist vorzugsweise einen für ihre Durchströmung mit einem Teil des Kühlfluids optimierten Querschnitt auf.

Die erfindungsgemäße Rotoreinheit für eine rotierende elektrische Maschine, insbesondere einen Turbogenerator, weist einen Rotor und wenigstens eine an zumindest einem vorgebbaren Abschnitt einer Außenseite des Rotors angeordnete Einrichtung gemäß einer der vorgenannten Ausgestaltungen oder einer beliebigen Kombination derselben auf. Mit dieser Rotoreinheit, welche zur Ausbildung einer rotierenden elektrischen Maschine, insbesondere eines Turbogenerators, verwendet werden kann, sind die oben mit Bezug auf die Einrichtung genannten Vorteile entsprechend verbunden.

Die erfindungsgemäße rotierende elektrische Maschine, insbesondere der Turbogenerator, umfasst einen Stator, einen Rotor und wenigstens eine Einrichtung gemäß einer der vorgenannten Ausgestaltungen der Einrichtung oder einer beliebigen Kombination derselben auf. Mit dieser rotierenden elektrischen Maschine, welche entsprechend eine vorbeschriebene Rotoreinheit aufweisen kann, sind die oben mit Bezug auf die Einrichtung genannten Vorteile entsprechend verbunden. Insbesondere kann die erfindungsgemäße rotierende elektrische Maschine unter hoher Auslastung sicher betrieben werden.

Nach dem erfindungsgemäßen Verfahren zum Kühlen einer einen Rotor und einen Stator aufweisenden rotierenden elektrischen Maschine, insbesondere eines Turbogenerators, wird ein Teil eines in einen sich axial zwischen dem Rotor und dem Stator erstreckenden Zwischenraum eingeleiteten Kühlfluids an wenigstens einem vorgebbaren Abschnitt der rotierenden elektrischen Maschine radial in Richtung des Stators abgelenkt. Mit diesem Verfahren sind die oben mit Bezug auf die Einrichtung genannten Vorteile entsprechend verbunden.

Der Teil des in den Zwischenraum eingeleiteten Kühlfluids wird bevorzugt mittels wenigstens einer in dem vorgebbaren Abschnitt der rotierenden elektrischen Maschine an einer Außenseite des Rotors und in dem Zwischenraum angeordnete Schaufel radial in Richtung des Stators abgelenkt. Vorzugsweise sind zwei oder mehrere Schaufeln, beispielsweise in Form von Schaufelreihen, an der Außenseite des Rotors angeordnet. Die Anordnung von Schaufeln an der Außenseite des Rotors stellt eine konstruktiv einfache und kostengünstige Möglichkeit zur Realisierung des Verfahrens dar. Die Schaufel kann als Radialschaufel oder als Schaufel eines Trommelläufer-Radialgebläses ausgebildet sein.

Im Folgenden werden bevorzugte Ausführungsformen der erfindungsgemäßen rotierenden elektrischen Maschine anhand der beigefügten schematischen Zeichnungen erläutert. Es zeigen:
Fig. 1 einen Ausschnitt eines Längsschnitts durch ein Ausführungsbeispiel für eine erfindungsgemäße rotierende elektrische Maschine, und
Fig. 2 einen Ausschnitt eines Längsschnitts durch ein weiteres Ausführungsbeispiel für eine erfindungsgemäße rotierende elektrische Maschine.

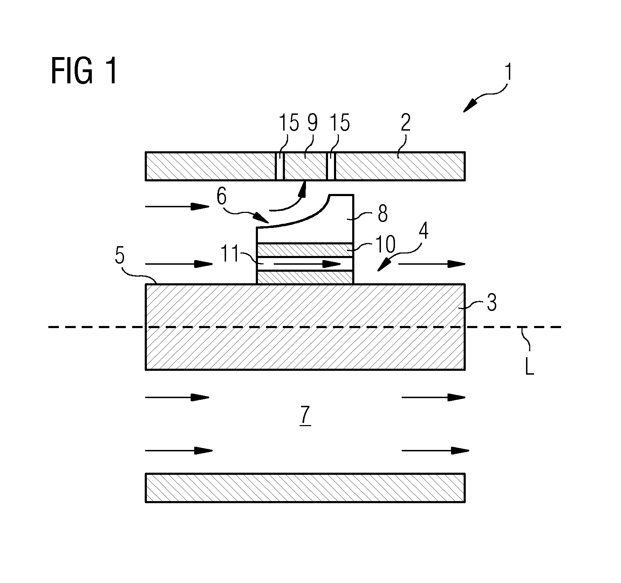

Figur 1 zeigt eine beispielhafte Ausführungsform einer erfindungsgemäßen rotierenden elektrischen Maschine 1 in Form eines Turbogenerators mit einem Stator 2 und einem Rotor 3. Der Rotor 3 ist Teil einer Rotoreinheit 4, die zudem eine an einem vorgebbaren Abschnitt einer Außenseite 5 des Rotors 3 angeordnete Einrichtung 6 zum Ablenken von zumindest einem Teil eines axial in einem zwischen dem Rotor 3 und dem Stator 2 angeordneten Zwischenraum 7 strömenden Kühlfluids aufweist. Die Strömung des Kühlfluids ist durch die Pfeile angedeutet.

Die Einrichtung 6 weist mehrere an einem vorgebbaren Abschnitt einer Außenseite 5 des Rotors 3, in dem Zwischenraum 7 und über dem Umfang des Rotors 3 verteilt angeordnete Schaufeln 8 in Form von Radialschaufeln auf, von denen in Figur 1 lediglich eine Schaufel 8 zu sehen ist. Die Schaufeln 8 sind derart ausgebildet und angeordnet, dass mit ihnen ein Teil des auf die Schaufeln 8 auftreffenden Kühlfluids radial in Richtung des Stators 2 abgelenkt wird. Der abgelenkte Teil des auf die Schaufeln 8 auftreffenden Kühlfluids wird in Richtung eines an dem Stator 2 angeordneten Hot-Spots 9 abgelenkt. Im Bereich des Hot-Spots 9 sind an dem Stator 2 Kühlöffnungen 15 angeordnet, durch die der abgelenkte Teil des Kühlfluids zum Kühlen des Hot-Spots 15 strömen kann.

Die Einrichtung 6 weist des Weiteren mehrere Verbindungselemente 10 auf, über welche die Schaufeln 8 mit dem Rotor 3 verbunden sind, wobei in Figur 1 lediglich ein Verbindungselement 10 dargestellt ist. An dem Verbindungselement 10 ist eine sich parallel zur Längsachse L des Rotors 3 erstreckende Durchlassöffnung 11 derart angeordnet, dass durch sie ein Teil des auf das Verbindungselement 10 auftreffenden Kühlfluids axial hindurchströmen kann. Die Schaufel 8 und das Verbindungselement 10 sind zur Ausbildung eines einzelnen Bauteils miteinander verbunden.

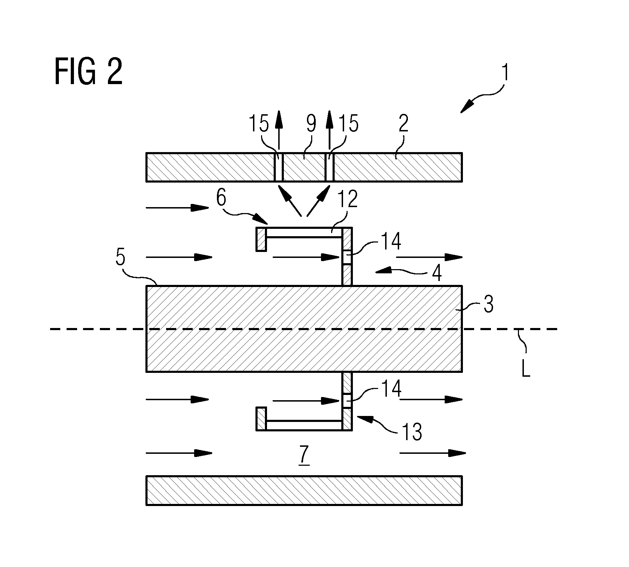

Figur 2 zeigt eine weitere beispielhafte Ausführungsform einer erfindungsgemäßen rotierenden elektrischen Maschine 1 in Form eines Turbogenerators mit einem Stator 2 und einem Rotor 3. Der Rotor 3 ist Teil einer Rotoreinheit 4, die zudem eine an einem vorgebbaren Abschnitt einer Außenseite 5 des Rotors 3 angeordnete Einrichtung 6 zum Ablenken von zumindest einem Teil eines axial in einem zwischen dem Rotor 3 und dem Stator 2 angeordneten Zwischenraum 7 strömenden Kühlfluids aufweist. Die Strömung des Kühlfluids ist durch die Pfeile angedeutet.

Die Einrichtung 6 weist mehrere an einem vorgebbaren Abschnitt einer Außenseite 5 des Rotors 3, in dem Zwischenraum 7 und über dem Umfang des Rotors 3 verteilt angeordnete Schaufeln 12 auf, von denen in Figur 1 lediglich eine Schaufel 12 zu sehen ist und die durch Schaufeln eines Trommelläufer-Radialgebläses 13 gebildet sind, welches mit dem Rotor 3 verbunden ist. Die Schaufeln 12 sind derart ausgebildet und angeordnet, dass mit ihnen ein Teil des in dem Zwischenraum 7 strömenden, auf die Schaufeln 12 auftreffenden Kühlfluids radial in Richtung des Stators 2 abgelenkt wird. Der abgelenkte Teil des auf die Schaufeln 12 auftreffenden Kühlfluids wird in Richtung eines an dem Stator 2 angeordneten Hot-Spots 9 abgelenkt. Im Bereich des Hot-Spots 9 sind an dem Stator 2 Kühlöffnungen 15 angeordnet, durch die der abgelenkte Teil des Kühlfluids zum Kühlen des Hot-Spots 15 strömen kann.

An dem Trommelläufer-Radialgebläse 13 sind mehrere sich parallel zur Längsachse L des Rotors 3 erstreckende Durchlassöffnungen 14 derart angeordnet, dass durch sie ein Teil des in dem Zwischenraum 7 strömenden Kühlfluids axial hindurchströmen kann.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Einrichtung (6) zum Ablenken von zumindest einem Teil eines axial in einem zwischen einem Rotor (3) und einem Stator (2) einer rotierenden elektrischen Maschine (1), insbesondere eines Turbogenerators, angeordneten Zwischenraum (7) strömenden Kühlfluids, **gekennzeichnet durch** wenigstens eine an einem vorgebbaren Abschnitt einer Außenseite (5) des Rotors (3) und in dem Zwischenraum (7) anordbare Schaufel (8, 12), welche derart ausgebildet und anordbar ist, dass mit ihr ein Teil des in dem Zwischenraum (7) strömenden Kühlfluids radial in Richtung des Stators (2) ablenkbar ist.

2. Einrichtung (6) gemäß Anspruch 1,
wobei die Schaufel (8) als Radialschaufel ausgebildet ist, auf die ein Teil des in dem Zwischenraum (7) strömenden Kühlfluids auftrifft.

3. Einrichtung (6) gemäß Anspruch 2,
aufweisend wenigstens ein Verbindungselement (10), über das die Schaufel (8) mit dem Rotor (3) verbindbar ist, wobei an dem Verbindungselement (10) zumindest eine sich parallel zur Längsachse (L) des Rotors (3) erstreckende Durchlassöffnung (11) derart angeordnet ist, dass durch sie ein Teil des auf das Verbindungselement (10) auftreffenden Kühlfluids axial hindurchströmen kann.

4. Einrichtung (6) gemäß Anspruch 3,
wobei die Schaufel (8) und das Verbindungselement (10) zur Ausbildung eines einzelnen Bauteils miteinander verbunden sind.

5. Einrichtung (6) gemäß einem der Ansprüche 2 bis 4,
aufweisend zwei oder mehrere an dem vorgebbaren Abschnitt des Rotors (3) über den Umfang des Rotors (3) verteilt anordbare Schaufeln (8).

6. Einrichtung gemäß Anspruch 1,
wobei die Schaufel (12) eine Schaufel eines Trommelläufer-Radialgebläses (13) ist, welches mit dem Rotor (3) verbunden ist.

7. Einrichtung gemäß Anspruch 6,
wobei an dem Trommelläufer-Radialgebläse (13) zumindest eine sich parallel zur Längsachse (L) des Rotors (3) erstreckende Durchlassöffnung (14) derart angeordnet ist, dass durch sie ein Teil des in dem Zwischenraum (7) strömenden Kühlfluids axial hindurchströmen kann.

8. Rotoreinheit (4) für eine rotierende elektrische Maschine (1), insbesondere für einen Turbogenerator,
aufweisend einen Rotor (3), **gekennzeichnet durch** wenigstens eine an zumindest einem vorgebbaren Abschnitt einer Außenseite (5) des Rotors (3) angeordnete Einrichtung (6) gemäß einem der Ansprüche 1 bis 7.

9. Rotierende elektrische Maschine (1), insbesondere Turbogenerator, mit einem Stator (2) und einem Rotor (3), **gekennzeichnet durch** wenigstens eine Einrichtung (6) gemäß einem der Ansprüche 1 bis 7.

10. Verfahren zum Kühlen einer einen Rotor (3) und einen Stator (2) aufweisenden rotierenden elektrischen Maschine (1), insbesondere eines Turbogenerators,
wobei ein Kühlfluid in einen sich axial zwischen dem Rotor (3) und dem Stator (2) erstreckenden Zwischenraum (7) eingeleitet wird, **dadurch gekennzeichnet, dass** ein Teil des in den Zwischenraum (7) eingeleiteten Kühlfluids an wenigstens einem vorgebbaren Abschnitt der rotierenden elektrischen Maschine (1) radial in Richtung des Stators (2) abgelenkt wird.

11. Verfahren gemäß Anspruch 10,
wobei der Teil des in den Zwischenraum (7) eingeleiteten Kühlfluids mittels wenigstens einer in dem vorgebbaren Abschnitt der rotierenden elektrischen Maschine (1) an einer Außenseite (5) des Rotors (3) und in dem Zwischenraum (7) angeordnete Radialschaufel (8) radial in Richtung des Stators (2) abgelenkt wird.
